# EUROPÄISCHE PATENTSCHRIFT

(11) **EP 3 898 033 B1**
(45) Veröffentlichungstag und Bekanntmachung des Hinweises auf die Patenterteilung: **28.06.2023**
(21) Anmeldenummer: 19820727.6
(22) Anmeldetag: 10.12.2019
(51) Int. Cl.: B22F 3/24, B22F 10/64, B33Y 40/20, C21D 6/04, C22F 1/00

(54) **VERFAHREN ZUM NACHBEHANDELN EINES MITTELS GENERATIVER FERTIGUNG HERGESTELLTEN WERKSTÜCKS**
POST-TREATMENT PROCESS OF A WORKPIECE PRODUCED BY ADDITIVE MANUFACTURING
PROCÉDÉ DE POST-TRAITEMENT D'UNE PIÈCE RÉALISÉE PAR FABRICATION ADDITIVE

(30) Priorität: 20.12.2018 DE 102018010079
(43) Veröffentlichungstag der Anmeldung: 27.10.2021
(73) Patentinhaber: Messer SE & Co. KGaA, 65812 Bad Soden (DE)
(72) Erfinder: BÖCKLER, Thomas, 52146 Würselen (DE); DUSIL, Matthias, 40549 Düsseldorf (DE); HILDEBRANDT, Bernd, 47918 Tönisvorst (DE); KAMPFFMEYER, Dirk, 52441 Linnich (DE); SELDERS, Georg, 47652 Weeze-Wemb (DE)
(74) Vertreter: Münzel, Joachim R.
(86) Internationale Anmeldenummer: PCT/EP2019/084460
(87) Internationale Veröffentlichungsnummer: WO 2020/126684

(56) Entgegenhaltungen:
- CN-A- 104 087 729
- CN-A- 104 129 083
- CN-A- 105 586 477
- CN-A- 108 588 582
- US-A1- 2004 182 202
- C.A. JAGADISH ET AL: "Effect of Cryogenic Treatment on the Mechanical Properties of 18Ni-300 Grade Maraging Steel Built Using the Direct Metal Laser Sintering (DMLS) Technology", KEY ENGINEERING MATERIALS, Bd. 719, 1. November 2016 (2016-11-01), Seiten 114-121, XP055657121, DOI: 10.4028/www.scientific.net/KEM.719.114
- A. CISKI ET AL: "Multistage cryogenic treatment of X153CrMoV12 cold work steel", IOP CONFERENCE SERIES: MATERIALS SCIENCE AND ENGINEERING, Bd. 461, 10. Dezember 2018 (2018-12-10), Seite 012012, XP055657645, DOI: 10.1088/1757-899X/461/1/012012

## Beschreibung

Die Erfindung betrifft ein Verfahren zum Nachbehandeln eines mittels generativer Fertigung hergestellten metallischen Werkstücks.

In der heutigen Produktion zeichnet sich ein zunehmender Trend zu generativen Fertigungsverfahren (auch als "additive Fertigungsverfahren" bezeichnet) ab. Als solche werden hier allgemein Fertigungsverfahren bezeichnet, bei denen ein dreidimensionales Werkstück schichtweise aus einem Werkstoff aus Metall oder Kunststoff hergestellt wird. War deren Einsatz bislang überwiegend auf die Fertigung von Prototypen beschränkt, wird zunehmend ein großes Potenzial für den Einsatz in der Serienfertigung gesehen, insbesondere für Serien kleinerer Stückzahlen und/oder zur Herstellung komplexer dreidimensionale Bauteile, die beispielsweise in der Luft- und Raumfahrtechnik, der Automobilindustrie oder in der Medizintechnik Anwendung finden.

Bei den pulverbettbasierten generativen Fertigungsverfahren wird ein pulverförmiger Werkstoff in einer dünnen Schicht auf eine Arbeitsfläche aufgebracht. Mittels eines Energiestrahls, insbesondere eines Laserstahls oder eines Elektronenstrahls, wird das Material nach einer rechnergestützten Vorlage punktgenau aufgeschmolzen oder aufgesintert. Das aufgeschmolzene bzw. aufgesinterte Material bildet beim Wiedererstarren eine feste Kontur (hier auch "Werkstückkontur" genannt) aus, die mit zuvor und/oder nachfolgend auf gleiche Weise hergestellten Konturen zu einem Werkstück zusammengefügt wird. Auf diese Weise können insbesondere Formkörper aufgebaut werden, die eine teilweise hochkomplexe dreidimensionale Struktur aufweisen. Pulverbasierte generative Fertigungsverfahren sind beispielsweise Elektronenstrahlschmelzen (EBM), selektives Laserstrahlschmelzen (SLM) oder selektives Lasersintern (SLS).

Weiterhin gibt es Überlegungen, Pulverspritzverfahren zum additiven Fertigen von Werkstücken einzusetzen. Beim Pulverspritzen wird ein pulverförmiger Werkstoff mittels eines Trägergases auf ein Substrat aufgetragen und durch einen Energiestrahl aufgeschmolzen. Als Energiestrahl kommt dabei in der Regel ein Plasmastahl (Plasma-Pulver-Auftragsschweißen) oder ein Laserstrahl (Laser-Metallauftragen, LMD) zum Einsatz.

Um das Werkstück vor negativen Einflüssen der Umgebungsatmosphäre zu schützen, finden pulverbasierte generative Fertigungsverfahren meist unter Schutzgas oder im Vakuum statt. Nach Beendigung der Fertigung muss das Werkstück bzw. die Werkstückkontur vor einer weiteren Bearbeitung abkühlen. Sofern ein Schutzgas zum Einsatz kommt, kann dieses den Prozess der Abkühlung unterstützen; bei additiven Fertigungsverfahren, die unter Vakuum durchgeführt werden, muss die gefertige Werkstückkontur gekühlt und die zuvor evakuierte Strahlkammer mit einem Gas auf Umgebungsdruck geflutet werden. Hierbei bietet sich insbesondere die Möglichkeit an, die Strahlkammer mit einem Inertgas, beispielsweise Helium, zu fluten, das gleichzeitig für eine Abkühlung des aufgrund der Fertigung erhitzten Werkstücks auf Umgebungstemperatur sorgt.

Beispielsweise beschreibt die WO 2015/155745 A1 ein Verfahren zur Herstellung eines Werkstücks mittels additiver Fertigung, bei dem in einer evakuierten Strahlkammer eine Lage eines pulverförmigen Ausgangsstoffs bereitgestellt wird. Diese wird vorgewärmt und einem selektiven Aufschmelzprozess durch Beaufschlagung mit einem Energiestrahl im Vakuum unterzogen, wodurch sich eine Werkstückkontur ergibt, die sich durch Abkühlung auf Umgebungstemperatur festigen muss. Um den Kühlprozess zu beschleunigen, wird die Strahlkammer mit einem inerten Kühlgasstrom geflutet. Als Kühlgas kommt beispielsweise Helium oder Argon zum Einsatz.

Zur Stabilisierung der Werkstücke bei der Herstellung mittels Pulververfahren während ihrer Herstellung ist es darüber hinaus bekannt, Metallpulver mit einem Binder, meist einem Polymer, zu vermischen und Lage für Lage nacheinander zu drucken. Nach der Fertigung wird das Werkstück einer Wärmebehandlung unterzogen, bei der der Binder durch Aufheizen ausgetrieben wird. Anschließend wird das Werkstück bei hoher Temperatur gesintert.

Als Alternative zu pulverbasierten Fertigungsverfahren haben sich drahtbasierte additive Fertigungsverfahren etabliert. Bei diesen Verfahren wird ein Metalldraht mittels einer Energiequelle aufgeschmolzen. Die Eigenschaften des gefertigten Bauteils werden dabei wesentlich durch die Wahl des Metalls bzw. der Metalllegierung des eingesetzten Drahts bestimmt. Als Energiequelle können hier Laserstrahlen, Elektronenstrahlen oder Lichtbogen (Wire Arc Additive Manufacturing, WAAM) zum Einsatz kommen.

Alle beschriebenen Verfahren zum 3D-Druck haben gemein, dass sie in der Regel nach der Fertigung einer Wärmebehandlung unterzogen werden mit dem Ziel, Eigenspannungen abzubauen, das Bauteilgefüge zu homogenisieren und auch die mechanisch-technologischen Gütewerte zu optimieren. Die Wärmebehandlungen werden in Wärmebehandlungsöfen unter einer Schutzgasatmosphäre oder im Vakuum durchgeführt.

Der Erfindung liegt die Aufgabe zugrunde, mechanisch-technische Eigenschaften von mittels generativer Fertigung erzeugten Werkstücken weiter zu verbessern.

Die Aufgabe der Erfindung wird durch ein Verfahren mit den Merkmalen des Patentanspruchs 1 gelöst. Vorteilhafte Ausgestaltungen der Erfindung werden in den Unteransprüchen beansprucht.

Erfindungsgemäß erfolgt also eine Nachbehandlung eines mittels generativer Fertigung hergestellten metallischen Werkstücks, bei der das Werkstück einer Kältebehandlung unterzogen wird, in der es in einer Abkühlphase auf eine untere Zieltemperatur von unter minus 50°C abgekühlt und anschließend in einer Aufwärmphase auf eine obere Zieltemperatur erwärmt wird.

Als ein mittels generativer (oder additiver) Fertigung hergestelltes Werkstück soll hier ein Werkstück verstanden werden, das aus schichtweise nacheinander erstellten Werkstückkonturen zusammengesetzt ist, die ihrerseits durch Aufschmelzen eines metallischen, insbesondere pulver- oder drahtförmigen Grundstoffs erzeugt werden. Als Grundstoff können im Rahmen der vorliegenden Erfindung alle üblichen zur additiven Fertigung eingesetzten metallischen Grundstoffe zum Einsatz kommen, insbesondere solche auf Aluminium-, Stahl-, Edelstahl-, Kupfer- oder Nickelbasis.

Als "Kältebehandlung" soll im Rahmen dieser Erfindung ein Verfahren bezeichnet werden, bei dem ein Werkstück Temperaturen von -50°C und darunter ausgesetzt wird. Die Kältebehandlung erfolgt bevorzugt in einem geschlossenen Behälter (Kältekammer), in dem eine entsprechend niedrige Behandlungstemperatur durch direkten oder indirekten Wärmekontakt des Werkstücks mit einem Kältemittel eingestellt wird. Beispielsweise wird in einer Kältekammer, der das zu behandelnde Werkstück zuvor zugeführt wurde, eine entsprechend temperierte Atmosphäre erzeugt, wodurch eine von allen Seiten gleichmäßige Temperierung des Werkstücks erzielt wird. Die Herstellung der temperierten Atmosphäre in der Kältekammer erfolgt dabei beispielsweise durch Einleiten des Kältemittels in die Kältekammer. Als Kältemittel kommt dabei bevorzugt ein kryogenes Medium zum Einsatz, das auf eine vorgegebene Temperatur von beispielsweise zwischen -150°C und -185°C gebracht wurde. Beispielsweise handelt es sich beim Kältemittel um kalten gasförmigen Stickstoff, der durch Mischen von warmem Stickstoffgas mit flüssigem Stickstoff in einem Kaltgasmischer hergestellt oder um ein Kühlgas, wie Stickstoff oder ein Edelgas, das durch indirekte Kühlung mit flüssigem Stickstoff in einem Wärmetauscher temperiert wurde.

Überraschend hat sich herausgestellt, dass die erfindungsgemäße Kältebehandlung einen positiven Einfluss auf die Eigenschaften von Werkstücken hat, die bei der generativen Fertigung durch Sintern oder durch Aufschmelzen und Erstarren erzeugt werden. Die Kältebehandlung vermindert insbesondere Eigenspannungen, die bei der Fertigung während der Erstarrungsphase innerhalb der aufgeschmolzenen Werkstückkonturen und/oder in der Verbindungsschicht zwischen diesen bestehen. Die Kältebehandlung begünstigt die Homogenisierung des Werkstoffs im Werkstück und bestimmt so die mechanisch-technischen Gütewerte mit. Besonders hervorzuheben ist dabei eine Erhöhung der Verschleißfestigkeit und der Härte.

Die erfindungsgemäße Kältebehandlung ist für alle Werkstücke geeignet, die nach gängigen additiven Fertigungsverfahren hergestellt werden, erfindungsmäßig eignet sie sich zur Nachbehandlung von Werkstücken, die mittels Pulverbettverfahren, Pulverspritzverfahren oder drahtbasierten additiven Fertigungsverfahren hergestellt wurden.

Die erfindungsgemäße Kältebehandlung erfolgt im Anschluss an die Fertigung des Werkstücks und kann alleine oder ergänzend zu einer Wärmenachbehandlung des Werkstücks vorgenommen werden, im letzteren Falle vor und/oder nach der Wärmenachbehandlung und/oder zwischen zwei Stufen einer Wärmenachbehandlung. In all diesen Fällen sind Verbesserungen hinsichtlich der mechanisch-technischen Gütewerte der metallischen Bauteile zu erwarten.

Kältebehandlungen metallischer Werkstücke sind beispielsweise aus der der US 6 537 396 B1, der US 3 819 428 B1, der EP 124 29 29 A1, der CN 103 463 739 A und dem Artikel von W. Lausecker, "Wie cool ist das - Die Tieftemperaturbehandlung von Zerspanung-Werkzeugen", Werkzeug-Technik 126,15. Juni 2012, bekannt und beziehen sich insbesondere auf die Umwandlungshärtung von Stahl. Hierbei wird die Härte eines aus einem Stück hergestellten Werkstücks dadurch gesteigert, dass das Werkstück im Anschluss an seine Herstellung und einer nachfolgenden Wärmebehandlung auf eine Temperatur zwischen minus 70°C und minus 180°C abgekühlt und auf dieser Temperatur für eine Zeitdauer von beispielsweise 15h gehalten wird. Eine Kältebehandlung als Nachbehandlung von Werkstücken, die mittels additiver Fertigung aus einer Mehrzahl von Werkstückkonturen erzeugt wurden, wurde dagegen noch nicht beschrieben.

Weiterhin werden in der CN 105 586 477 A, der CN 104 087 729 A, der CN 108 588 582 A und der US 2004/182202 A1 Kältebehandlungen von mittels generativer Fertigung erzeugten metallischen Werkstücken beschrieben. Dabei erfolgt während der Behandlung eine stetige Reduzierung der Temperatur bis zum Erreichen eines unteren Zielwerts, wobei in den genannten Druckschriften jeweils unterschiedliche Zielwerte und Abkühlgeschwindigkeiten genannt werden.

Die untere Zieltemperatur, also die tiefste Abkühltemperatur während der erfindungsgemäßen Kältebehandlung, beträgt bevorzugt zwischen minus 50°C und minus 195°C, besonders bevorzugt zwischen minus 100°C und minus 185°C, wobei Werte unter minus 150°C besonders gute Ergebnisse zeigen.

Bei der das Verfahren abschließenden oberen Zieltemperatur handelt es sich um einen Temperaturwert, der geeignet ist, die Kondensation von Wasser aus einer insbesondere bei Normalbedingungen (20°C) vorliegenden Umgebungsatmosphäre zu verhindern, um Korrosionen an der Werkstückoberfläche zu vermeiden. Bis zum Erreichen der oberen Zieltemperatur erfolgt die Durchführung der erfindungsgemäßen Kältebehandlung daher bevorzugt in einer inerten Atmosphäre mit geringem Wasseranteil, beispielsweise in einer Atmosphäre, die überwiegend aus gasförmigem Stickstoff und/oder einem Edelgas besteht. Erfindungsgemäß beträgt die obere Zieltemperatur zwischen 20°C und 40°C.

Die Erfindung sieht vor, dass das Werkstück im Anschluss an die Abkühlphase und vor der Aufwärmphase eine Haltephase durchläuft, in der das Werkstück für eine Dauer von mindestens 30s auf der unteren Zieltemperatur gehalten wird. Bereits bei Haltezeiten zwischen 30s und 10 min ergibt sich eine deutliche Verbesserung der Verschleißbeständigkeit des Werkstücks. Eine Haltezeit, die 90 min übersteigt, ist erfindungsgemäß nicht erforderlich, wenngleich nicht ausgeschlossen. Bevorzugt beträgt die Dauer der Haltephase zwischen 10 min und 60 min.

Die Abkühlung und Aufwärmung des Werkstücks in der Kältebehandlung erfolgt bevorzugt langsam, um sicherzustellen, dass es zu keinem Temperaturschock kommt und eine vollständige und gleichmäßige Durchkühlung des Werkstücks erzielt wird. Demzufolge ist vorgesehen, dass die Abkühlung des Werkstücks in der Abkühlphase und/oder das Aufwärmen des Werkstücks in der Aufwärmphase nicht rascher als mit einer Temperaturänderung (Geschwindigkeit) ΔT/Δt von ΔT/Δt ≤ 10 K/min erfolgt, bevorzugt beträgt ΔT/Δt zwischen 1 K/min und 10 K/min, besonders bevorzugt zwischen 1,5 K/min und 5 K/min (Unterbrechungszeiten beim Abkühl- bzw. Aufwärmvorgang jeweils nicht eingerechnet).

Um eine gleichmäßige Abkühlung bzw. Aufwärmung zu gewährleisten, ist es darüber hinaus vorteilhaft, den Abkühlvorgang in der Abkühlphase und/oder den Aufwärmvorgang der Aufwärmphase die Abkühlung bzw. Aufwärmung des Werkstücks mehrfach zu unterbrechen und das Werkstück für eine vorgegebene Zeitdauer auf einer vorgegebenen Zwischentemperatur zu halten (Zwischenhaltephase). Beispielsweise kann in Abständen von 5K bis 50K jeweils eine Unterbrechung eingefügt werden, während der das Werkstück im Wesentlichen auf der erreichten Temperatur gehalten wird. Im Anschluss an die Zwischenhaltephase wird der Abkühlvorgang bzw. der Aufwärmvorgang wie zuvor fortgeführt. Während der Unterbrechungen können im Kristallverband des Werkstückmaterials noch mit einer vergleichsweise hohen Diffusionsgeschwindigkeit Umlagerungsprozesse stattfinden, die die Homogenität des Werkstoffes und damit Ausprägung positiver Werkstoffeigenschaften begünstigen können. Die Dauer einer Zwischenhaltephase in der Abkühlphase und/oder der Aufwärmphase liegt erfindungsgemäß bevorzugt bei jeweils mindestens 30s, bevorzugt jeweils zwischen 1 min und 120 min.

Die Erfindung sieht vor, das Werkstück während der Abkühlphase und/oder Haltephase und/oder einer Zwischenhaltephase ein- oder mehrmals zu erwärmen und anschließend wieder auf die untere Zieltemperatur oder eine andere Temperatur abzukühlen. Eine solche zwischenzeitliche Aufwärmphase kann anstelle oder ergänzend zur einer Zwischenhaltephase erfolgen. Durch die zwischenzeitlichen Aufwärmphasen werden im behandelten Material Spannungen abgebaut, die aufgrund der Temperaturänderungen im Verlauf der Kältebehandlung im Material auftreten können. Zusammen mit einer dem jeweiligen Werkstück angepassten Abkühlgeschwindigkeit steigern zwischenzeitliche Aufwärmphasen so die Güteeigenschaften des Werkstücks. Beispielsweise erfolgt in der Abkühlphase und/oder der Haltephase eine ein- oder mehrmalige Erwärmung, wobei die Anfangstemperatur (also die Temperatur vor Beginn der Kältebehandlung) nicht überschritten wird. Abhängig von der Ausgangstemperatur erfolgt dabei jeweils eine Erwärmung um mindestens 10K, bevorzugt mindestens 50K, beispielsweise auf einen Temperaturwert von jeweils zwischen -140°C und -160°C. Im Anschluss an diese zwischenzeitliche Aufwärmphase wird das Werkstück für eine gewisse Zeit auf der tiefen Temperatur gehalten, oder es schließt sich eine weitere zwischenzeitliche Aufwärmphase an oder es erfolgt eine weitere Abkühlung auf eine noch tiefere Temperatur, insbesondere auf die untere Zieltemperatur.

Die Temperierung, d.h. das Abkühlen oder das Aufwärmen des Werkstücks während der Kältebehandlung erfolgt zweckmäßigerweise durch Erzeugen einer entsprechend temperierten Atmosphäre in einer das Werkstück enthaltenden Kältekammer. Zur Erzeugung der temperierten Atmosphäre in der Kältekammer wird beispielsweise außerhalb der Kältekammer ein inertes Gas, beispielsweise Stickstoff oder ein Edelgas, auf eine entsprechende Temperatur gebracht und anschließend der Kältekammer zugeführt. Das Werkstück befindet sich bevorzugt während der gesamten Kältebehandlung in einer inerten Atmosphäre, um insbesondere negative Einflüsse von Luftsauerstoff und Wasserdampf auszuschließen.

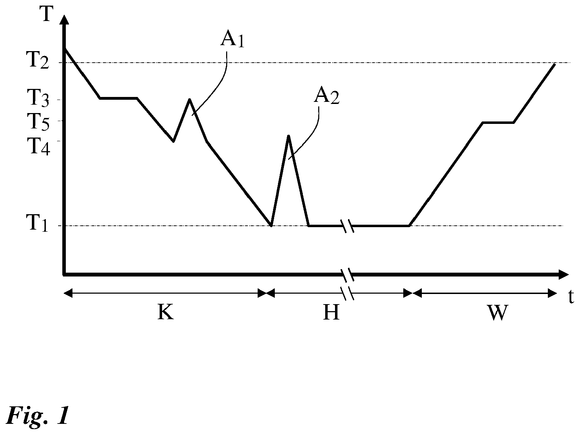

Anhand der Zeichnung soll ein Ausführungsbeispiel der Erfindung näher erläutert werden. Die einzige Zeichnung (Fig. 1) zeigt in einem Temperatur (T) - Zeit (t) - Diagramm schematisch den Verlauf der Temperatur eines mittels additiver Fertigung hergestellten Werkstücks während der Nachbehandlung nach einem erfindungsgemäßen Verfahren.

Eine mittels additiver Fertigung erzeugtes Werkstück, das beispielsweise bei Umgebungstemperatur oder - aufgrund einer vorangegangenen Wärmebehandlung - bei einer Temperatur über der Umgebungstemperatur vorliegt, wird einer Kältekammer zugeführt und diese anschließend verschlossen. Durch Zuführung eines Kältemittels wird die Temperatur der Atmosphäre im Innern der Kältekammer langsam, beispielsweise mit einer Geschwindigkeit ΔT/Δt zwischen 1 K/min und 10 K/min, abgesenkt. Zur Erzeugung des Kältemittels wird beispielsweise in einem separaten Behälter Stickstoffgas mit flüssigem Stickstoff oder mit Stickstoffgas, das eine Temperatur nahe dem Siedepunkt von Stickstoff (-196°C) besitzt, in einer solchen Menge vermischt, dass das entstehende kalte Stickstoffgas eine vorgegebene Temperatur aufweist. Das Kältemittel wird sukzessive der Kältekammer zugeführt und senkt dabei die Temperatur der Atmosphäre im Innern der Kältekammer und damit die Temperatur des Werkstücks während einer Abkühlphase K bis auf eine untere Zieltemperatur T₁ von beispielsweise minus 150°C. Im Anschluss an die Abkühlphase K wird das Werkstück für einen Zeitraum von beispielweise 1 min bis 100 min auf der unteren Zieltemperatur T₁ gehalten (Haltephase H). Im Anschluss an die Haltephase H wird das Werkstück durch Zufuhr eines Warmgases (beispielsweise Stickstoff), dessen Temperatur höher als die Temperatur im Innern der Kältekammer ist, allmählich, d.h. mit einer Aufwärmgeschwindigkeit, die der Abkühlgeschwindigkeit in der Abkühlphase K vergleichbar ist, auf eine obere Zieltemperatur T₂, erwärmt (Aufwärmphase W). T₂ entspricht beispielsweise der Umgebungstemperatur. Nach der Kältebehandlung wird das additiv erzeugte Werkstück aus der Kältekammer entnommen und kann weiteren Behandlungs- oder Verarbeitungsschritten zugeführt werden. Das bei der Zuführung des Kältemittels bzw. Warmgases aus der Kältekammer gleichzeitig abgezogene Gas wird in die Umgebung abgeleitet oder einer weiteren Verwendung zugeführt.

Während der Abkühlphase K kann die Zufuhr des Kältemittels ein- oder mehrmals gestoppt und dadurch die Abkühlung des Werkstücks verlangsamt oder auf einer vorgegebenen Temperatur gehalten werden. Ebenso kann in der Aufwärmphase W die Zufuhr von warmem Gas ein- oder mehrmals unterbrochen und so die Aufwärmgeschwindigkeit verlangsamt oder das Werkstück auf einer vorgegebene Temperatur gehalten werden. In diesen Zwischenhaltephasen gilt also ΔT/Δt << 1 K/min. In dem in der Zeichnung gezeigten Ausführungsbeispiel erfolgt jeweils eine Zwischenhaltephase während der Abkühlphase K bei der Temperaturen T₃ mit T₁ < T₃ < T₂ und während der Aufwärmphase W bei einer Temperatur T₅ mit T₁<T₅<T₂.

Um aufgrund der Kältebehandlung auftretende Spannungen im behandelten Material abzubauen, ist es vorteilhaft, die Temperatur des Werkstücks in der Kältekammer während der Abkühlphase K und/oder der Haltephase H vorübergehend zu erhöhen. In diesen zwischenzeitlichen Aufwärmphasen A₁, A₂ erfolgt eine Temperaturerhöhung des Werkstücks auf eine Zwischentemperatur T₃, T₄. Die Zwischentemperatur liegt beispielsweise 10K bis 50K oberhalb der Temperatur des Werkstücks zu Beginn der zwischenzeitlichen Aufwärmphase A₁, A₂, jedoch unterhalb der Anfangstemperatur vor Beginn der Kältebehandlung. Im hier gezeigten Ausführungsbeispiel erfolgt eine erste zwischenzeitliche Aufwärmphase A₁ während der Abkühlphase K auf den Wert T₃, und eine zweite Aufwärmphase A₂, nachdem bereits die untere Zieltemperatur T₁ erreicht wurde, auf einen Wert T₄, wobei im Ausführungsbeispiel T₃ > T₄ gilt, was allerdings im Rahmen der Erfindung nicht zwingend erforderlich ist. Im Anschluss an die Aufwärmphase A₂ kann sich eine weitere zwischenzeitliche Aufwärmphase (hier nicht gezeigt) anschließen, oder das Werkstück verbleibt für eine gewisse Zeitdauer auf der unteren Zieltemperatur T₁.

## Patentansprüche

1. Verfahren zum Nachbehandeln eines mittels generativer Fertigung hergestellten metallischen Werkstücks, bei dem das Werkstück in einem Pulverbettverfahren, einem Pulverspritzverfahren oder in einem additiven Fertigungsverfahren mittels Drahtzufuhr derart gefertigt wird, dass das Material mittels eines Energiestrahls nach einer rechnergestützten Vorlage punktgenau aufgeschmolzen oder aufgesintert wird und bei dem das Werkstück nach seiner Fertigung einer Kältebehandlung unterzogen wird, in der das Werkstück in einer Abkühlphase (K) auf eine untere Zieltemperatur (T₁) von unter minus 30°C abgekühlt und anschließend in einer Aufwärmphase (W) auf eine obere Zieltemperatur (T₂) erwärmt wird,
**dadurch gekennzeichnet,**
**dass** die obere Zieltemperatur (T₂) zwischen 20°C und 40°C beträgt, das Werkstück nach der Abkühlphase (K) und vor der Aufwärmphase (W) eine Haltephase (H) durchläuft, in der das Werkstück für eine Dauer von mindestens 30s auf der unteren Zieltemperatur (T₁) gehalten wird und die Abkühlphase (K) und/oder die Haltephase (W) unterbrochen und das Werkstück während einer zwischenzeitlichen Aufwärmphase (A1, A2) um mindestens 10K auf eine Zwischentemperatur (T3, T4) erwärmt und anschließend wieder abgekühlt wird, wobei die Abkühlung des Werkstücks in der Abkühlphase (K) und das Aufwärmen des Werkstücks in der Aufwärmphase (W) und der wenigstens einen zwischenzeitlichen Aufwärmphase (A1, A2) mit einer Geschwindigkeit zwischen 1,5 K/min und 10 K/min erfolgt.

2. Verfahren nach Anspruch 1, **dadurch gekennzeichnet, dass** die untere Zieltemperatur (T₁) zwischen minus 50°C und minus 195°C, bevorzugt zwischen minus 100°C und minus 185°C beträgt.

3. Verfahren nach Anspruch 1 oder 2, **dadurch gekennzeichnet, dass** das Werkstück während der zwischenzeitlichen Aufwärmphase (A₁, A₂) um mindestens 50K erwärmt wird.

4. Verfahren nach einem der vorhergehenden Ansprüche, **dadurch gekennzeichnet, dass** die Abkühlphase (K) und/oder die Aufwärmphase (W) und/oder wenigstens eine zwischenzeitliche Aufwärmphase (A₁, A₂) für eine Zeitdauer von mindestens 30s unterbrochen wird, während der das Werkstück auf einer erreichten Temperatur (T₃) im Wesentlichen gehalten wird.

## Claims

1. Method for after-treating a metallic workpiece produced by means of additive manufacturing, wherein the workpiece is manufactured in a powder bed process, a powder spraying process or in an additive manufacturing process by means of supply of wire such that the material is melted or sintered with point precision by means of an energy beam according to a computer-aided model and wherein the workpiece, after it has been manufactured, is subjected to a cold treatment in which the workpiece is cooled in a cooling phase (K) to a lower target temperature (T₁) of below -30°C and subsequently warmed in a warming phase (W) to an upper target temperature (T₂),
**characterized**
**in that** the upper target temperature (T₂) is between 20°C and 40°C, the workpiece goes through a hold phase (H) in which the workpiece is held for a time of at least 30s at the lower target temperature (T₁) after the cooling phase (K) and before the warming phase (W), and the cooling phase (K) and/or the hold phase (W) is interrupted and the workpiece is warmed by at least 10K to an intermediate temperature (T3, T4) during an intermediate warming phase (A₁, A2) and subsequently cooled again, the cooling of the workpiece in the cooling phase (K) and the warming of the workpiece in the warming phase (W) and the at least one intermediate warming phase (A1, A2) being carried out at a rate between 1.5 K/min and 10 K/min.

2. Method according to Claim 1, **characterized in that** the lower target temperature (T₁) is between -50°C and -195°C, preferably between -100°C and -185°C.

3. Method according to Claim 1 or 2, **characterized in that** the workpiece is warmed by at least 50K during the intermediate warming phase (A₁, A₂).

4. Method according to any of the preceding claims, **characterized in that** the cooling phase (K) and/or the warming phase (W) and/or at least one intermediate warming phase (A₁, A₂) is interrupted for a period of time of at least 30s during which the workpiece is essentially held at an attained temperature (T₃).

## Revendications

1. Procédé de post-traitement d'une pièce à usiner métallique fabriquée par fabrication générative, dans lequel la pièce à usiner est fabriquée dans un procédé de lit de poudre, un procédé de pulvérisation de poudre ou dans un procédé de fabrication additive au moyen d'une alimentation en fil de telle manière que le matériau est fondu ou fritté très précisément au moyen d'un faisceau d'énergie selon un modèle assisté par ordinateur et dans lequel la pièce à usiner est soumise après sa fabrication à un traitement à froid dans lequel la pièce à usiner est refroidie dans une phase de refroidissement (K) jusqu'à une température cible inférieure (T₁) inférieure à moins 30 °C et est ensuite réchauffée dans une phase de réchauffement (W) jusqu'à une température cible supérieure (T₂), **caractérisé en ce**
**que** la température cible supérieure (T₂) est comprise entre 20 °C et 40 °C, la pièce à usiner passe, après la phase de refroidissement (K) et avant la phase de réchauffement (W), par une phase de maintien (H) au cours de laquelle la pièce à usiner est maintenue à la température cible inférieure (T₁) pendant une durée d'au moins 30 s et la phase de refroidissement (K) et/ou la phase de maintien (W) est/sont interrompue(s) et la pièce à usiner est réchauffée d'au moins 10 K pendant une phase de réchauffement intermédiaire (A1, A2) jusqu'à une température intermédiaire (T3, T4) et est ensuite à nouveau refroidie, le refroidissement de la pièce à usiner pendant la phase de refroidissement (K) et le réchauffement de la pièce à usiner pendant la phase de réchauffement (W) et l'au moins une phase de réchauffement intermédiaire (A1, A2) s'effectuant à une vitesse comprise entre 1,5 K/min et 10 K/min.

2. Procédé selon la revendication 1, **caractérisé en ce que** la température cible inférieure (T₁) est comprise entre moins 50 °C et moins 195 °C, préférablement entre moins 100°C et moins 185 °C.

3. Procédé selon la revendication 1 ou 2, **caractérisé en ce que** la pièce à usiner est réchauffée d'au moins 50 K pendant la phase de réchauffement intermédiaire (A1, A2).

4. Procédé selon l'une quelconque revendication précédente, **caractérisé en ce que** la phase de refroidissement (K) et/ou la phase de réchauffement (W) et/ou au moins une phase de réchauffement intermédiaire (A1, A2) est/sont interrompue(s) pendant une durée d'au moins 30 s, pendant laquelle la pièce à usiner est essentiellement maintenue à une température atteinte (T₃).
